# EUROPÄISCHE PATENTSCHRIFT

(11) **EP 0 961 085 B1**
(45) Veröffentlichungstag und Bekanntmachung des Hinweises auf die Patenterteilung: **24.07.2002**
(21) Anmeldenummer: 98109693.6
(22) Anmeldetag: 28.05.1998
(51) Int. Cl.: F24D 3/16, F24F 5/00

(54) **Anordnung einer Deckenstrahlplatten-Heizung**
Radiant ceiling panels arrangement
Dispositif de chauffage avec des plaques rayonnantes de plafond

(43) Veröffentlichungstag der Anmeldung: 01.12.1999
(73) Patentinhaber: Zehnder Verkaufs- und Verwaltungs AG, 5722 Gränichen (CH)
(72) Erfinder: Sexauer, Gerd, 79341 Kenzingen (DE)
(74) Vertreter: Stenger, Watzke & Ring Patentanwälte

(56) Entgegenhaltungen:
- EP-A- 0 676 593
- US-A- 5 415 155

## Beschreibung

Die Erfindung betrifft eine Anordnung einer Deckenstrahlplatten-Heizung aus mindestens einer Deckenstrahlplatte, die aus einem Plattenelement mit einer Mehrzahl von von einem wärmeabgebenden Medium durchströmten Rohren besteht, die endseitig mit einem Verteiler beziehungsweise Sammler verbunden sind.

Derartige Deckenstrahlplatten-Heizungen sind bekannt. Sie bestehen aus mindestens einer Deckenstrahlplatte, die aus an einem Plattenelement angeordneten Rohren besteht, die endseitig über einen Verteiler beziehungsweise Sammler miteinander und mit dem Vorlauf beziehungsweise dem Rücklauf einer Heizungsanlage verbunden sind. Derartige Deckenstrahlplatten werden bis zu einer maximalen Länge von 8 Metern hergestellt. Bei größeren Baulängen werden die Deckenstrahlplatten entweder durch Aneinanderschweißen mehrerer Rohre und Plattenelemente verlängert oder mehrere Deckenstrahlplatten hintereinander angeordnet, wobei die Verbindung der hintereinanderliegenden Deckenstrahlplatten wiederum über Sammler beziehungsweise Verteiler erfolgt.

Sowohl die Verlängerung einzelner Deckenstrahlplatten durch Verbinden mehrerer Elemente als auch die Hintereinanderanordnung mehrerer Deckenstrahlplatten erfolgt durch Verschweißen, da in der Aufheiz- und Abkühlphase axiale Belastungen sowohl in den Rohren als auch in den Plattenelementen auftreten, die bisher nur durch Verschweißen von Einzelelementen aufgenommen werden konnten. Der Versuch, die Verbindungen der Rohre durch Pressfittings herzustellen, hat in den überwiegenden Fällen zu Undichtigkeiten geführt. Sodaß es sich um unlösbare Verbindungen handelt, welche nur durch Aufsägen der Rohre beziehungsweise durch das Heraustrennen der Fittinge wieder gelöst werden konnten. Beispielsweise bei einem Auftreten einer Undichtigkeit am Kopfstück oder innerhalb eines Deckenstrahlelementes beziehungsweise eines Teilstückes ergab sich damit ein sehr großer Aufwand für den Austausch dieses Teiles. Auch eine nachträgliche Änderung der Deckenstrahlplatten-Heizung, beispielsweise bedingt durch die Verlängerung des Gebäudes, war nur mit großem Aufwand möglich.

Die US 5,415,155 beschreibt, im Unterschied zu gattungsgemäßen Deckenstrahlheizplatten, ein Modulelement mit mehreren darin ausgebildeten, nebeneinander angeordneten und parallelen Kanälen, welche sich von einer Stimseite des Modulelementes zu einer gegenüberliegenden Stirnseite erstrecken. Zum Verbinden zweier Modulelemente ragen die Kanäle auf einer Stimseite des Modulelementes zapfenartig über die Abschlßkante des Modulelementes hinaus, und die Kanäle sind auf der gegenüberliegenden Stirnseite des Modulelementes zu zur Aufnahme der zapfenartigen Vorsprünge eines weiteren Modulelementes ausgebildeten Bohrungen aufgeweitet. Zum Zusammenfügen zweier Modulelemente werden nun die zapfenartigen Vorsprünge des einen Modulelementes in die Aufnahmebohrungen eines zweiten Modulelementes geführt, bis die benachbarten Modulelemente entlang ihrer Abschlußkante aneinander anliegen. Für die Herstellung fluiddichter Verbindungen wird für Ausbildungen aus Metall ebenfalls Löten bzw. Schweißen, für solche aus kunststoffkleben oder Ultraschallschweißen vorgeschlagen, ebenso wie O-Ringdichtungen.

Der Erfindung liegt die **Aufgabe** zugrunde, die Anordnung einer Deckenstrahlplatten-Heizung der eingangs beschriebenen Art zu beschaffen, die sich einerseits aus einzelnen Modulen bei preisgünstiger Herstellung, Lagerhaltung und einfacher Montage herstellen und andererseits problemlos ändern, insbesondere erweitern läßt.

Die **Lösung** dieser Aufgabenstellung durch die Erfindung ist in Patentanspruch 1 gekennzeichnet.

Sie ist dadurch gekennzeichnet, daß sämtliche Rohre der Deckenstrahlplatte parallel zueinander durchströmt und jeweils mittels einer lösbaren Steckkupplung oder Verschraubung entweder mit den Anschlußstutzen eines Verteilers oder Sammlers oder mit den Rohren einer weiteren Deckenstrahlplatte verbindbar sind.

Durch die parallele Durchströmung sämtlicher Rohre einer Deckenstrahlplatte wird das Problem des Auftretens von Spannungen innerhalb der Deckenstrahlplatte aufgrund von Strömungsumlenkungen und den damit verbundenen unterschiedlichen Längenausdehnungen der Rohre innerhalb einer Platte vermieden. Gleichzeitig wird hierdurch der Einsatz lösbarer Steckkupplungen oder Verschraubungen möglich, so daß die einzelnen Deckenstrahlplatten modular ohne Verteiler oder Sammler hergestellt werden können, die entsprechend der jeweils gewünschten Anordnung der Deckenstrahlplatten-Heizung vor Ort über die lösbaren Steckkupplungen oder Verschraubungen mit den Rohren der Deckenstrahlplatte verbunden werden. Es wird somit möglich, einzelne Deckenstrahlplatten ohne Verteiler oder Sammler auf Lager zu fertigen und bei der Montage der jeweiligen Deckenstrahlplatten-Heizung die gewünschte Anordnung durch Zusammenstellen eines Verteilers und eines Sammlers mit der jeweils benötigten Anzahl von Deckenstrahiplatten zu schaffen. Die Verbindung der Rohre einer Deckenstrahlplatte entweder mit den Anschlußstutzen eines Verteilers oder eines Sammlers oder mit den Rohren einer weiteren Deckenstrahlplatte erfolgt hierbei über lösbare Steckkupplungen oder Verschraubungen. Durch Lösen dieser Verbindungselemente kann somit jederzeit ein defektes Bauteil ausgetauscht oder die Anordnung durch Hinzunahme von weiteren Deckenstrahlplatten erweitert werden.

Auf der Zeichnung sind zwei Ausführungsbeispiele einer erfindungsgemäßen Anordnung einer Deckenstrahlplatten-Heizung dargestellt, und zwar zeigen:
- Fig. 1: eine schematische Ansicht einer aus einer Deckenstrahlplatte bestehenden Heizung und
- Fig. 2: eine schematische Ansicht einer aus drei Deckenstrahlplatten bestehenden Heizungsanordnung.

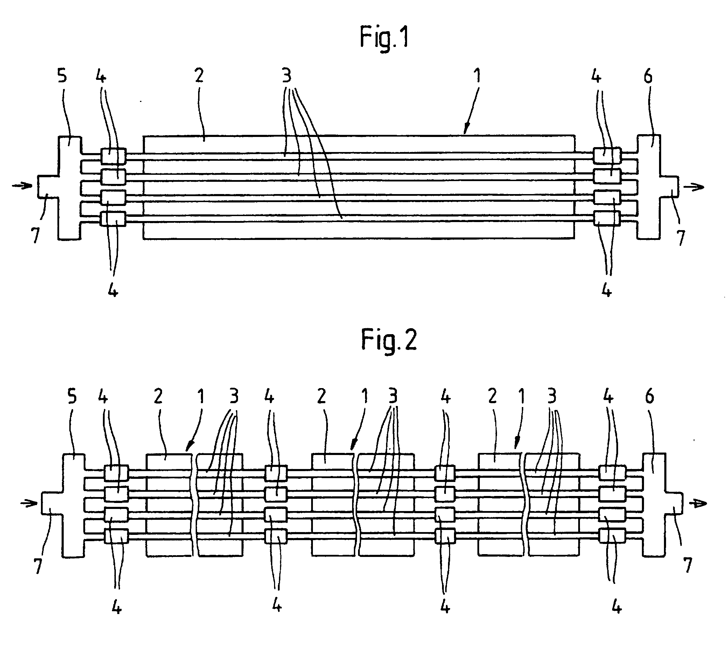

Die in den Fig. 1 und 2 nur schematisch dargestellten, in Fig. 2 verkürzt gezeichneten Deckenstrahlplatten 1 bestehen jeweils aus einem aus Blech hergestellten Plattenelement 2, das mit einer Anzahl von geraden, parallel zueinander verlaufenden Rohren 3 versehen ist. Diese Rohre 3 sind vorzugsweise in halbkreisförmige Aufnahmenuten des Plattenelementes 2 eingelegt und überragen die Querränder des Plattenelements 2, wie aus den Zeichnungen ersichtlich ist. Derartige Deckenstrahlplatten können entweder mit denselben oder mit unterschiedlichen Abmessungen hergestellt und gelagert werden.

Um eine Deckenstrahlplatten-Heizung herzustellen, werden die Rohre 3 mindestens einer Deckenstrahlplatte 1 gemäß Fig. 1 über lösbare Steckkupplungen 4 mit den Anschlußstutzen eines Verteilers 5 beziehungsweise eines Sammlers 6 verbunden. Der Verteiler 5 und der Sammler 6 sind jeweils mit einem Anschlußstutzen 7 für den Vorlauf beziehungsweise den Rücklauf einer Heizungsanlage versehen. Wie aus Fig. 1 hervorgeht, ergibt sich hierdurch eine parallele Durchströmung sämtlicher Rohre 3 der Deckenstrahlplatte 1 in derselben Richtung.

Die Fig. 2 zeigt die Anordnung einer Deckenstrahlplatten-Heizung unter Verwendung von drei Deckenstrahlplatten 1. Die Zeichnung zeigt, daß die Rohre 3 der Deckenstrahlplatten 1 entweder mit den Anschlußstutzen des Verteilers 5 beziehungsweise des Sammlers 6 oder mit den Rohren 3 der benachbarten Deckenstrahlplatte 1 durch lösbare Steckkupplungen 4 verbunden sind. Auf diese Weise läßt sich die Leistung der Heizungsanordnung durch die Wahl entsprechend vieler Deckenstrahlplatten 1 dem jeweiligen Bedarf anpassen.

Da sämtliche Rohre 3 sämtlicher Deckenstrahlplatten 1 parallel und in derselben Richtung vom wärmeabgebenden Medium durchströmt werden, werden insbesondere in der Aufheiz- und Abkühlphase der Heizung jegliche Spannungen innerhalb einer Deckenstrahlplatte 1 vermieden. Längenänderungen der gesamten Heizungsanordnung lassen sich leicht durch eine entsprechende Aufhängung der aus einem Verteiler 5, mindestens einer Deckenstrahlplatte 1 und einem Sammler 6 bestehenden Heizung aufnehmen.

Beim Auftreten von Undichtigkeiten oder bei der Notwendigkeit, die Heizungsanordnung vorzugsweise durch Hinzunahme weiterer Deckenstrahlplatten 1 zu vergrößern, lassen sich die einzelnen Elemente durch Lösen der Steckkupplungen 4 problemlos voneinander trennen, so daß nicht nur die Herstellung einer Heizungsanordnung, sondern auch deren gegebenenfalls notwendig werdende Reparatur und Erweiterung auf einfache und kostengünstige Weise durchgeführt werden kann.

Anstelle von lösbaren Steckkupplungen können auch lösbare Verschraubungen verwendet werden.

### Bezugszeichenliste

- 1: Deckenstrahlplatte
- 2: Plattenelement
- 3: Rohr
- 4: Steckkupplung
- 5: Verteiler
- 6: Sammler
- 7: Anschlußstutzen

## Patentansprüche

1. Anordnung einer Deckenstrahlplatten-Heizung aus mindestens einer Deckenstrahlplatte (1), die aus einem aus Blech hergestellten Plattenelement (2), das mit einer Mehrzahl von von einem wärmeabgebenden Medium durchströmten parallelen Rohren (3) versehen ist, besteht , die endseitig mit einem Verteiler (5) beziehungsweise Sammler (6) verbindbar sind,
**dadurch gekennzeichnet,**
**daß** sämtliche Rohre (3) der Deckenstrahlplatte (1) parallel zueinander durchströmt und jeweils endseitig zur Anordnung einer separaten, lösbaren Steckkupplung (4) oder Verschraubung ausgestattet sind und entweder mit den Anschlußstutzen eines Verteilers (5) oder Sammlers (6) oder mit den Rohren (3) einer weiteren Deckenstrahlplatte (1) verbindbar sind.

## Claims

1. Arrangement of a radiant-ceiling-panel heater comprising at least one radiant ceiling panel (1) which consists of a panel element (2) which is made of sheet metal and is provided with a multiplicity of parallel tubes (3) through which a heat-emitting medium flows and which can be connected at the ends to a distributor (5) and collector (6), respectively, **characterized in that** all the tubes (3) of the radiant ceiling panel (1) are subjected to throughflow parallel to one another and are each equipped at the ends for the arrangement of a separate, detachable push-in coupling (4) or screwed connection and can be connected either to the connecting pieces of a distributor (5) or collector (6) or to the tubes (3) of a further radiant ceiling panel (1).

## Revendications

1. Dispositif de chauffage à plaques radiantes suspendues au plafond constitué d'au moins une plaque radiante suspendue (1) elle-même composée d'une plaque élémentaire (2) en tôle qui est munie d'une pluralité de tuyaux parallèles (3) parcourus par un fluide exothermique, lesquels peuvent être reliés à leurs extrémités à un distributeur (5) ou à un collecteur (6),
**caractérisé en ce que** tous les tuyaux (3) de la plaque radiante suspendue (1) sont parcourus parallèlement les uns aux autres et sont équipés à leurs extrémités en vue du montage d'un dispositif d'accouplement femelle (4) ou d'un raccord à vis, séparés et détachables, et **en ce qu'**ils peuvent être reliés soit aux tubulures de raccordement d'un distributeur (5) ou d'un collecteur (6), soit aux tuyaux (3) d'une autre plaque radiante suspendue (1).
